# FASCICULE DE BREVET EUROPEEN

(11) **EP 4 095 554 B1**
(45) Date de publication et mention de la délivrance du brevet: **20.03.2024**
(21) Numéro de dépôt: 22173159.9
(22) Date de dépôt: 13.05.2022
(51) Int. Cl.: G01S 13/78, G01S 13/72

(54) **PROCÉDÉ DE GESTION D'UN RADAR SECONDAIRE FONCTIONNANT EN MODE S POUR ÉVITER LE PROBLÈME DE " BDS SWAP**
VERFAHREN ZUR STEUERUNG EINES IM S-MODUS ARBEITENDEN SEKUNDÄRRADARS ZUR VERMEIDUNG DES »BDS SWAP -PROBLEMS
METHOD FOR MANAGING A SECONDARY RADAR OPERATING IN S-MODE FOR PREVENTING THE PROBLEM OF BDS SWAP

(30) Priorité: 25.05.2021 FR 2105395
(43) Date de publication de la demande: 30.11.2022
(73) Titulaire: THALES, 92400 Courbevoie (FR)
(72) Inventeur: CARLIER, David, 76520 Ymare (FR); MATIAS, Lionel, 78990 Elancourt (FR); REUILLON, Philippe, ARLINGTON, VA 22202 (US); MEIGNAN, Yves, 91470 Limours (FR)
(74) Mandataire: Atout PI Laplace

(56) Documents cités:
- MARIANO PAOLO ET AL: "Data integrity augmentation by ADS-B SSR hybrid techniques", 2018 INTEGRATED COMMUNICATIONS, NAVIGATION, SURVEILLANCE CONFERENCE (ICNS), IEEE, 10 avril 2018 (2018-04-10), XP033358026, DOI: 10.1109/ICNSURV.2018.8384893
- TADASHI KOGA ET AL: "Autonomous continuous target tracking technology for safety in air traffic radar systems network", SERVICE ORIENTED SYSTEM ENGINEERING (SOSE), 2011 IEEE 6TH INTERNATIONAL SYMPOSIUM ON, IEEE, 12 décembre 2011 (2011-12-12), pages 235-240, XP032102825, DOI: 10.1109/SOSE.2011.6139112 ISBN: 978-1-4673-0411-5
- KEISUKE MATSUNAGA ET AL: "SSR mode S downlink aircraft parameters validation and evaluation", INTEGRATED COMMUNICATIONS, NAVIGATION AND SURVEILLANCE CONFERENCE (ICNS), 2013, IEEE, 22 avril 2013 (2013-04-22), pages 1-23, XP032432107, DOI: 10.1109/ICNSURV.2013.6548611 ISBN: 978-1-4673-6251-1

## Description

L'invention concerne de manière générale aux systèmes radar, et en particulier un procédé et un dispositif de gestion d'un radar secondaire fonctionnant en mode S.

Les radars secondaires sont utilisés pour effectuer un contrôle de la navigation aérienne (ATC). Un radar secondaire, par opposition à un radar primaire qui exploite la réflexion d'une onde électromagnétique sur un aéronef, coopère avec un transpondeur situé dans un aéronef, ou avec un répondeur IFF de bord pour un aéronef militaire, en l'interrogeant afin d'obtenir au minimum son identification (code 3/A) et son altitude (code C) et de déterminer sa position.

Dans les radars secondaires de première génération (modes A/C), les transpondeurs répondaient systématiquement à toutes les interrogations des radars secondaires, ce qui engendrait beaucoup de perturbations ou pollution RF. Par ailleurs, le contenu des réponses était limité par le nombre de bits de données (12 bits maximum).

Le mode S, S comme Sélectif, largement implémenté aujourd'hui, permet d'interroger et de suivre un nombre conséquent d'aéronefs dans la zone de couverture du radar, en réduisant la pollution RF.

Comme pour les radars secondaires de première génération, le radar secondaire mode S, en détectant une réponse, reçoit l'altitude et l'immatriculation de l'aéronef et en détermine sa position. Le radar peut également recevoir des informations sur le type d'aéronef, sa vitesse, son cap etc ... Ces données additionnelles sont présentées sous forme de registres (« BDS » pour Comm-B Data Selector) identifiées par un numéro, et sont disponibles par requête (un BDS par interrogation).

En mode S, les interrogations sont soit de type « All-Call » (interrogation générale), soit de type « Roll-Call » (interrogation sélective). Dans une interrogation générale de type « All-Call », le radar demande à tous les transpondeurs situés dans sa zone de couverture, leur numéro d'identification, sur 24 bits, appelé adresse Mode S.

Quand le radar a acquis l'aéronef, c'est-à-dire qu'il est capable de prédire la position de l'aéronef, pour chaque nouveau tour d'antenne, il interroge l'aéronef en Roll-Call, d'abord dans une fenêtre spatiale large pour couvrir les incertitudes de la prédiction, cette phase est appelée par la suite « mode chasse ». Le radar obtient ainsi une première position précise de l'aéronef qui lui permet de réduire la fenêtre d'interrogation pour les interrogations « Roll-Call » suivantes et pouvoir dédier le reste de l'espace / temps à l'interrogation des autres aéronefs présents dans son domaine de surveillance. Cette deuxième phase est par la suite appelée « mode poursuite ».

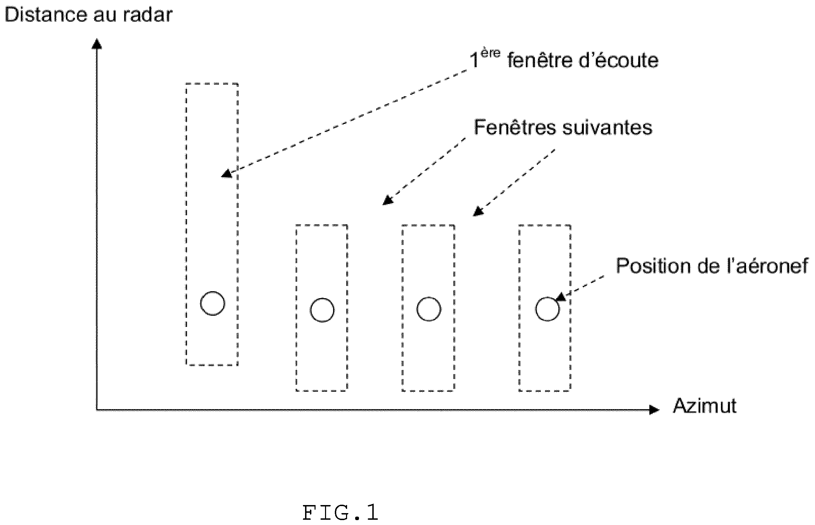

La figure 1 illustre la réduction, dans un même tour d'antenne, de la taille de la fenêtre en « mode poursuite », centrée sur l'aéronef détectée en « mode chasse ».

Une fois l'acquisition de l'aéronef confirmée, le radar verrouille le transpondeur de l'aéronef en question pendant dix-huit secondes. Le transpondeur verrouillé de l'aéronef ne répond plus aux interrogations « All-Call » provenant d'un interrogateur radar, ayant le même code station radar que celui du radar qui a verrouillé l'aéronef. Ce verrouillage est renouvelé (le temps de verrouillage est réinitialisé pour durer dix-huit nouvelles secondes) lors de chaque interrogation « Roll-Call » contenant une commande de verrouillage.

Lorsque deux radars envoient à un même transpondeur une interrogation et que ces interrogations arrivent de façon quasi-simultanée au transpondeur, le transpondeur n'émet qu'une seule réponse pour les deux interrogations.

Le radar (radar 1) dont l'interrogation a été prise en compte par le transpondeur, reçoit une réponse (contenant un BDS) conforme à son interrogation. En revanche, le second radar (radar 2), dont l'interrogation a été ignorée, reçoit la même réponse donc erronée, qui ne correspond pas à son interrogation mais à celle du radar 1. De plus, le radar 2 ne reçoit jamais de réponse à l'interrogation qu'il avait, lui, envoyée.

Un tel phénomène est appelé « BDS swap » (ou échange de BDS). Le phénomène de BDS swap peut être observé dans des zones à forte densité de radars secondaires en mode S. Ce phénomène impacte l'efficacité de la chaîne de surveillance, de sorte qu'il nécessite d'être corrigé. Les systèmes automatiques de gestion du trafic aérien connus peuvent être en mesure de traiter ces anomalies, mais seulement après plusieurs tours d'antennes (i.e. plusieurs rotations de la partie mobile de l'antenne).

Ce phénomène et ses conséquences ont été détaillés par l'European Union Aviation Safety Agency dans son document EASA.2016.FC19 SC.001. En particulier, l'utilisation par le radar de données incorrectes peut l'induire en erreur sur les changements d'accélération ou de trajectoire de vol.

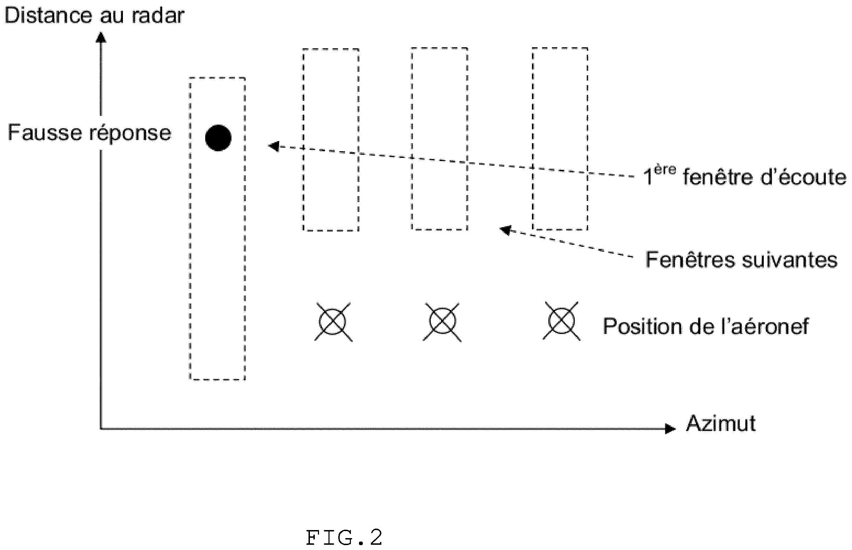

La figure 2 illustre les conséquences du BDS swap dans le cas où les données incorrectes ont induit en erreur le radar sur sa distance réelle à l'aéronef. Le radar ayant détecté la mauvaise réponse BDS, il en déduit une distance erronée. Ainsi, la taille de la fenêtre d'écoute, pour le « mode poursuite », est réduite mais autour de cette distance erronée. Dans le même tour d'antenne, le radar continue d'interroger le transpondeur mais ignore ses réponses car non positionnées dans la bonne fenêtre d'écoute.

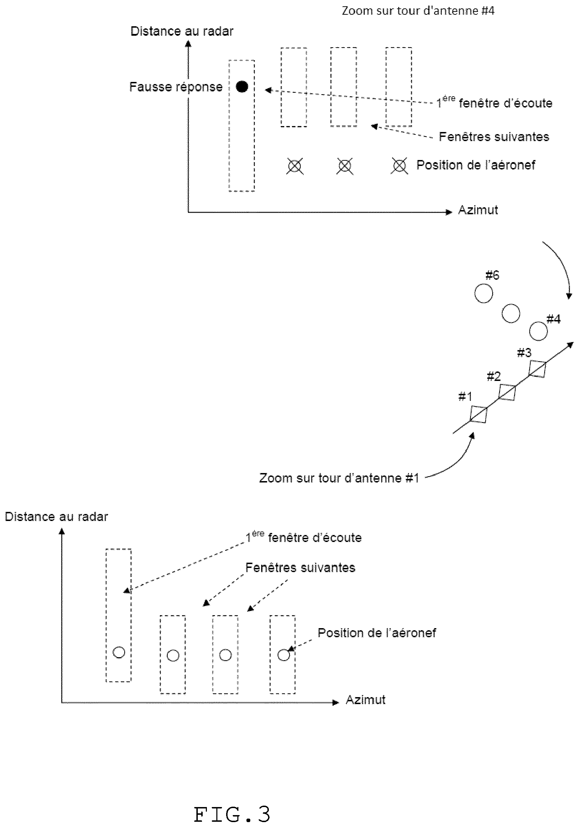

Pour le tour d'antenne suivant, le radar continue d'interroger le transpondeur dans une fenêtre prédite calculée à partir de la position précédente qui est erronée. Comme l'illustre la figure 3, cette position prédite est éloignée de la vraie trajectoire, le radar n'a aucune chance de réacquérir le transpondeur (par exemple pour le radar la cible a fait un virage brutal à 90°).

Le transpondeur étant verrouillé, il ne répond plus aux interrogations « All-Call » qui permettraient au radar de le relocaliser. Il faut attendre que le transpondeur soit déverrouillé et que le radar acquiert à nouveau l'aéronef.

L'état de l'art propose des solutions pour résoudre les problèmes de BDS swaps.

Une première solution consiste à vérifier la cohérence des messages UF/DF (Uplink Format / Downlink Format). En effet, les interrogations (message UF pour « Uplink Format » ou format de liaison montante) sont envoyées par le radar à destination du transpondeur et les réponses (messages DF pour « Downlink Format » ou format de liaison descendante) sont émises par le transpondeur à destination du radar.

Si la réponse ne correspond pas à la demande, la réponse est rejetée.

Par exemple, une interrogation UF=4 (Surveillance, altitude request) attend uniquement soit une réponse DF=4 (Surveillance, altitude reply) soit une réponse DF=20 (Comm-B, altitude reply). Une interrogation UF=5 (Surveillance, identify request) attend uniquement soit une réponse DF=5 (Surveillance, identify reply) soit une réponse DF=21 (Comm-B, identify reply).

Cette solution ne permet toutefois pas d'échapper au phénomène de BDS swap, lorsque les deux interrogateurs ont demandé les mêmes informations. Or, dans le contrôle du trafic aérien, ce sont souvent les mêmes informations qui sont demandées.

Une deuxième solution consiste à vérifier la cohérence du premier octet du registre BDS 1,0, du registre BDS 2,0 ou encore du registre BDS 3,0. Lorsque le numéro BDS peut être extrait de la réponse, ce qui est le cas uniquement pour ces registres, le traitement vérifie si l'interrogation était destinée à ces BDS.

Cette solution n'est toutefois pas valable pour tous les registres BDS.

Une troisième solution connue consiste à inclure le numéro du BDS dans le code de la parité de la réponse « DF » contenant le BDS qui sera renvoyé par le transpondeur. Ainsi, lorsque l'interrogateur reçoit la réponse, il peut vérifier, grâce au contrôle de parité si la réponse correspond au registre BDS attendu. Cette solution correspond à la technique du « BDS overlay », introduite par l'amendement 89 de l'annexe 10 Volume IV de l'ICAO.

Le déploiement de cette solution nécessite cependant d'effectuer une mise à jour logicielle au niveau des transpondeurs, ce qui est contraignant.

Le document D1 « Data Integriy Augmentation by ADS-B SSR Hybrid Techniques » (Mariano et al., 2018 Integrated communications, navigation, surveillance conférence) présente une solution de surveillance coopérative pour des systèmes de gestion du trafic aérien. Le document D1 ne cherche toutefois pas à résoudre le problème de BDS swap.

Le document D2 « Autonomous Continuous Target Tracking Technology for Safety in Air Traffic Radar Systemes Network » (Koga et al., 2011 IEEE 6th International Symposium on Service oriented System Engineering) présente le postage d'un aéronef par deux radars, mais ne cherche pas à résoudre le problème de BDS swap.

Il existe ainsi un besoin pour un procédé et un dispositif de gestion d'un radar secondaire amélioré.

Un objet de l'invention est donc un procédé de gestion d'un radar secondaire fonctionnant en mode S, le procédé comprenant :
a) une détection en « mode chasse », ledit « mode chasse » étant mis en oeuvre tant qu'un aéronef n'a pas été détectée par le radar secondaire, le « mode chasse » comprenant une pluralité de périodes d'interrogations générales du radar secondaire (All-Call), et une pluralité de périodes d'interrogations sélectives (Roll-Call), sur une première fenêtre d'écoute ;
b) une détection en « mode poursuite », ledit « mode poursuite » étant mis en oeuvre si une réponse valide à une interrogation sélective Roll-Call a été détectée pendant le « mode chasse », le « mode poursuite » comprenant une pluralité de périodes d'interrogations générales (All-Call), et une pluralité de périodes d'interrogations sélectives (Roll-Call), avec une deuxième fenêtre d'écoute, ladite deuxième fenêtre d'écoute étant autour de la position de l'aéronef prédite par le radar secondaire en réponse à une interrogation générale (All-Call) ;
   le procédé étant caractérisé en ce qu'il comprend une étape intermédiaire a1), exécutée entre la détection en « mode chasse » et la détection en « mode poursuite », ladite étape intermédiaire comprenant :
   une détection de la présence ou non de la réponse de l'aéronef dans une fenêtre de bruit du radar secondaire ;
   une réalisation d'au moins une interrogation sélective (Roll-Call), en utilisant la première fenêtre d'écoute, tant que la réponse de l'aéronef ne se trouve pas dans ladite fenêtre de bruit.

Le procédé comprend avantageusement les modes de réalisation suivants :

Le radar secondaire comprend une antenne, la première fenêtre d'écoute étant calculée, pour un aéronef donné, à partir de la vitesse de rotation de l'antenne du radar secondaire, et de la position prédite de l'aéronef au tour d'antenne suivant.

La position prédite de l'aéronef est calculée à partir de toutes les positions possibles de l'aéronef calculées à partir de la trajectoire connue de l'aéronef et de paramètres cinématiques de l'aéronef reçus par le radar secondaire.

La fenêtre de bruit est calculée à partir de la différence entre une trajectoire idéale de l'aéronef et une position de l'aéronef prédite par le radar secondaire.

La trajectoire idéale de l'aéronef est calculée à partir d'un ensemble d'hypothèses de vol de l'aéronef selon une trajectoire en ligne droite et à une vitesse d'aéronef constante.

La position prédite de l'aéronef est calculée à partir d'un ensemble d'écarts calculés, un écart correspondant à l'écart entre une estimation de la position de l'aéronef et une position mesurée de l'aéronef dans l'un des tours précédents depuis la première détection de l'aéronef.

L'écart est intégré dans le temps en utilisant un filtre récurrent.

Le filtre récurrent est un filtre de Kalman étendu.

La position prédite de l'aéronef est calculée à partir de l'erreur de mesure du radar.

L'invention se rapporte aussi à un radar secondaire configuré pour mettre en oeuvre le procédé précité.

D'autres caractéristiques, détails et avantages de l'invention ressortiront à la lecture de la description faite en référence aux dessins annexés donnés à titre d'exemple et qui représentent, respectivement :
la figure 1, déjà décrite, illustre la réduction de la fenêtre d'interrogation entre le « mode chasse » et le « mode poursuite », dans un cas nominal (pas de BDS swap) ;
la figure 2, déjà décrite, illustre la réduction de la fenêtre d'interrogation entre le « mode chasse » et le « mode poursuite », dans un cas défaillant (suite à un BDS swap) ;
la figure 3, déjà décrite, illustre l'apparition d'un BDS swap et une localisation erronée de l'aéronef ;
la figure 4 illustre le procédé selon l'invention ;
la figure 5 illustre les différentes fenêtres utilisées dans le procédé selon l'invention, ainsi que la représentation d'une réponse et du plot associé ;

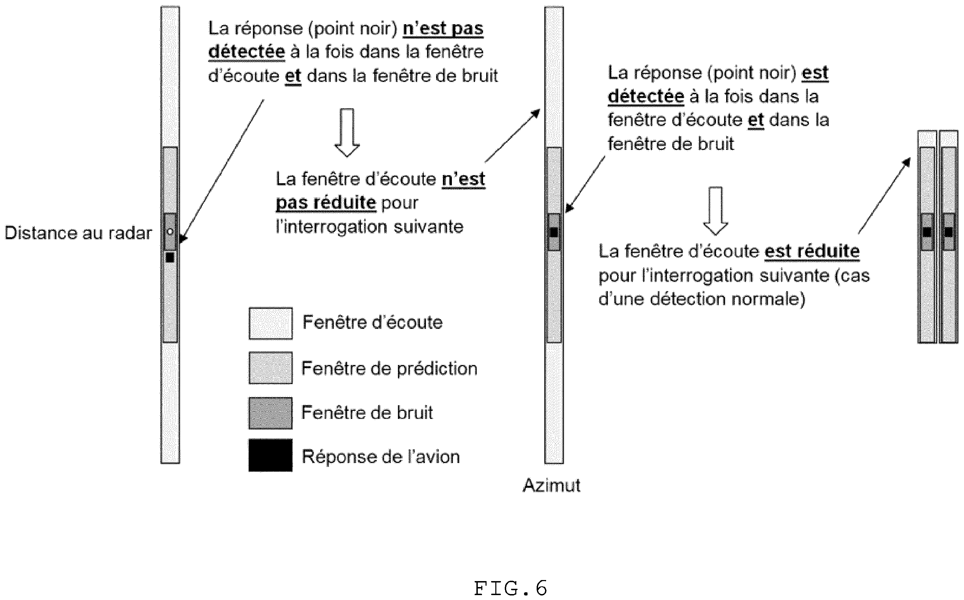

la figure 6 illustre le cas où une nouvelle interrogation est effectuée.

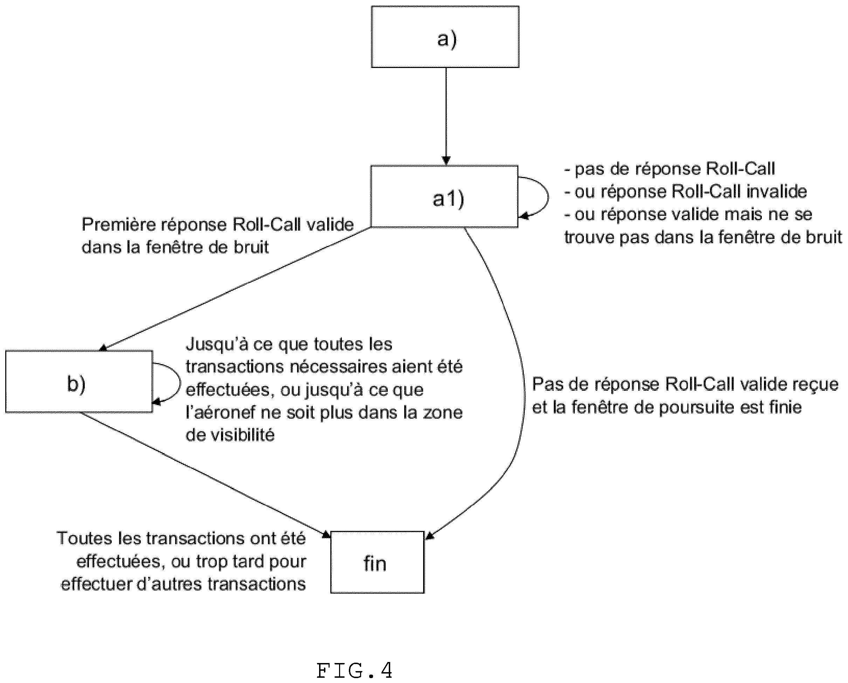

Le procédé selon l'invention est illustré par la figure 4.

Dans une première étape a), on met en oeuvre le « mode chasse » tant qu'un aéronef n'a pas été détecté par le radar secondaire.

Comme indiqué précédemment, la première fenêtre d'écoute utilisée dans le « mode chasse » est assez grande pour tenir à la fois les contraintes de cinématique données par le standard European Mode S ainsi que les incertitudes estimées sur la position réelle de l'aéronef.

La première fenêtre d'écoute peut être calculée, pour un aéronef donné, à partir de la vitesse de rotation de l'antenne du radar secondaire, et de la position prédite de l'aéronef au tour d'antenne suivant.

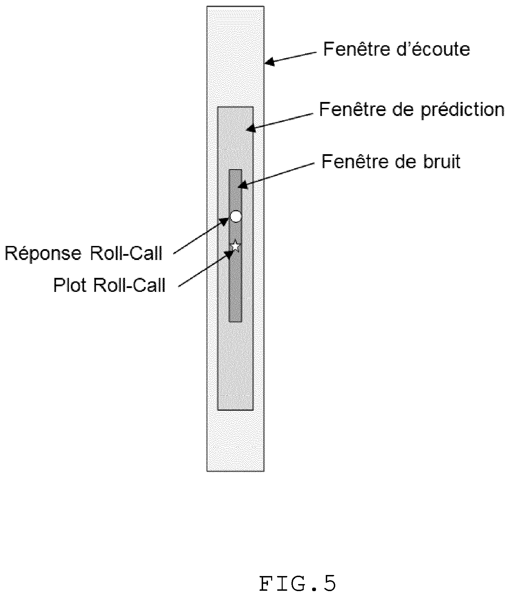

La fenêtre d'écoute, illustrée par la figure 5 comprend plusieurs composantes indépendantes : la fenêtre de prédiction et la fenêtre de bruit.

La fenêtre de prédiction, construite autour de la position prédite de l'aéronef, prend en compte les critères d'évolutions cinématiques demandés par le standard Mode S européen comme par exemple une accélération transversale jusqu'à 5g et longitudinale jusqu'à 1g.

La fenêtre de bruit, centrée sur la position de l'aéronef, prend en compte l'estimation des erreurs de mesures faites lors des interrogations précédentes et les imprécisions estimées du modèle de prédiction de la position de l'aéronef.

L'estimation des erreurs de mesures est une donnée constructeur.

Les imprécisions sur le modèle de prédiction sont estimées par le radar. Elles représentent la différence entre la trajectoire idéale de l'avion et la position de l'avion prédite par le radar. La trajectoire idéale de l'avion est calculée à partir des hypothèses de vol en ligne droite et de vitesse constante ou de virage à accélération longitudinale et transversale constante.

Les imprécisions sur la position prédite de l'aéronef sont estimées à partir de l'écart (azimut, distance au radar) entre les positions mesurées et les prédictions lors des tours d'antenne précédents et courant (depuis la première détection de l'objet), intégrées dans le temps via un filtre récurrent (filtre de Kalman étendu par exemple), et à partir des erreurs de détection du radar (donnée constructeur) et d'incertitude par rapport aux modèles de trajectoires et intégrée dans le temps(paramètre radar défini par l'opérateur).

Dans un tour d'antenne donné une fois qu'un aéronef a été détecté dans le lobe d'antenne du radar secondaire, et avant que la détection ne passe en « mode poursuite », le procédé comprend une étape intermédiaire a1).

L'étape intermédiaire a1) comprend deux sous-étapes.

La première sous-étape i) consiste à détecter si la réponse de l'aéronef à l'interrogation sélective se trouve dans une fenêtre de bruit du radar secondaire.

On peut trouver deux explications au fait que la réponse de l'aéronef ne se trouve pas dans la fenêtre de bruit.

La première est liée à un début ou une fin de manoeuvre de l'aéronef, à savoir une accélération transversale jusqu'à 5g ou longitudinale jusqu'à 1g.

La deuxième explication est que la réponse reçue n'était pas destinée au radar, ce qui est typique d'une situation de BDS swap. Le protocole du mode S ne prévoit pas d'identification du registre BDS de l'aéronef dans la réponse.

Dans ce cas, le radar secondaire effectue une nouvelle interrogation sélective en utilisant la première fenêtre d'écoute (deuxième sous étape ii). La probabilité qu'un nouveau BDS swap ait lieu est infime, la réponse de la cible devrait donc se trouver dans la fenêtre de bruit de la première fenêtre d'écoute de la nouvelle interrogation.

Dans l'hypothèse, assez peu fréquente en trafic civil, que la nouvelle réponse de l'aéronef, suite à la nouvelle interrogation sélective, ne se trouve pas dans la fenêtre de bruit, une nouvelle interrogation sélective en utilisant la première fenêtre d'écoute, est effectuée, et ainsi de suite.

L'algorithme de placement des interrogations et des fenêtres d'écoute doit pouvoir tenir compte des nouvelles interrogations effectuées pour éviter le phénomène de BDS swap, et gérer cette légère surcharge de traitement. La contrainte sur le temps d'écoute est donc temporairement plus forte.

Néanmoins, grâce à ce traitement, le problème de BDS swap est traité immédiatement, et le dispositif évite la perte de piste.

Une fois que l'étape intermédiaire a1) a été effectuée, la détection en « mode poursuite » peut être mise en oeuvre. Le mode « poursuite » permet de pister l'aéronef avec une fenêtre d'écoute réduite.

Pour cela, le radar procède à une série d'interrogations sélectives, avec une deuxième fenêtre d'écoute, de taille inférieure à la première fenêtre d'écoute du « mode chasse ». La deuxième fenêtre d'écoute est de la taille minimale nécessaire pour capturer la réponse d'un aéronef dont on connait exactement la distance au radar.

Sur un tour d'antenne, les interrogations en « mode poursuite » sont effectuées jusqu'à ce que toutes les transactions (interrogations/réponses) aient été réalisées, ou jusqu'à ce que l'antenne du radar ne pointe plus dans la direction de l'aéronef.

Par ailleurs, si, à l'étape intermédiaire a1), aucune réponse valide à une interrogation sélective n'est reçue, et que le balayage est terminé, le procédé se termine.

Les instants d'émission des interrogations sélectives, que ce soit dans le « mode chasse » ou dans le « mode poursuite », sont déterminés de façon dynamique en fonction des positions attendues des aéronefs interrogés. L'algorithme de placement des interrogations doit notamment faire en sorte qu'aucune réponse attendue ne soit susceptible d'être reçue au même moment qu'une autre réponse à une seconde interrogation.

Le procédé selon l'invention ne nécessite pas de changer les transpondeurs actuellement installés dans les aéronefs, ni même de les mettre à jour. Par ailleurs, la mise à jour des radars secondaires peut se faire de façon progressive. Il n'est pas nécessaire que tous les radars secondaires d'une zone mettent en oeuvre le procédé selon l'invention.

L'invention se rapporte également à un radar secondaire apte à mettre en oeuvre le procédé précité. Le radar secondaire selon l'invention n'est pas structurellement différent des radars secondaires connus de l'homme du métier, si ce n'est que son module de traitement est adapté pour insérer des fenêtres d'interrogation supplémentaires en cas de BDS swap.

## Revendications

1. Procédé de gestion d'un radar secondaire fonctionnant en mode S, le procédé comprenant :
a) une détection en « mode chasse », ledit « mode chasse » étant mis en oeuvre tant qu'un aéronef n'a pas été détectée par le radar secondaire, le « mode chasse » comprenant une pluralité de périodes d'interrogations générales du radar secondaire, All-Call, et une pluralité de périodes d'interrogations sélectives, Roll-Call, sur une première fenêtre d'écoute, la première fenêtre d'écoute comprenant une fenêtre de bruit ;
b) une détection en « mode poursuite », ledit « mode poursuite » étant mis en oeuvre si une réponse valide à une interrogation sélective Roll-Call a été détectée pendant le « mode chasse », le « mode poursuite » comprenant une pluralité de périodes d'interrogations générales, All-Call, et une pluralité de périodes d'interrogations sélectives, Roll-Call, avec une deuxième fenêtre d'écoute, ladite deuxième fenêtre d'écoute étant autour de la position de l'aéronef prédite par le radar secondaire en réponse à une interrogation générale, All-Call ; le procédé étant **caractérisé en ce qu'**il comprend une étape intermédiaire a1), exécutée entre la détection en « mode chasse » et la détection en « mode poursuite », ladite étape intermédiaire comprenant :
i) Une détection de la présence ou non de la réponse de l'aéronef dans une fenêtre de bruit du radar secondaire ;
ii) Une réalisation d'au moins une interrogation sélective, Roll-Call, en utilisant la première fenêtre d'écoute, tant que la réponse de l'aéronef ne se trouve pas dans ladite fenêtre de bruit.

2. Procédé selon la revendication 1, dans lequel le radar secondaire comprend une antenne, la première fenêtre d'écoute étant calculée, pour un aéronef donné, à partir de la vitesse de rotation de l'antenne du radar secondaire, et de la position prédite de l'aéronef au tour d'antenne suivant.

3. Procédé selon la revendication 2, dans lequel la position prédite de l'aéronef est calculée à partir de toutes les positions possibles de l'aéronef calculées à partir de la trajectoire connue de l'aéronef et de paramètres cinématiques de l'aéronef reçus par le radar secondaire.

4. Procédé selon l'une des revendications précédentes, dans lequel la fenêtre de bruit est calculée à partir de la différence entre une trajectoire idéale de l'aéronef et une position de l'aéronef prédite par le radar secondaire.

5. Procédé selon la revendication 4, dans lequel la trajectoire idéale de l'aéronef est calculée à partir d'un ensemble d'hypothèses de vol de l'aéronef selon une trajectoire en ligne droite et à une vitesse d'aéronef constante.

6. Procédé selon l'une des revendications 2 à 5, dans lequel la position prédite de l'aéronef est calculée à partir d'un ensemble d'écarts calculés, un écart correspondant à l'écart entre une estimation de la position de l'aéronef et une position mesurée de l'aéronef dans l'un des tours précédents depuis la première détection de l'aéronef.

7. Procédé selon la revendication 6, dans lequel l'écart est intégré dans le temps en utilisant un filtre récurrent.

8. Procédé selon la revendication 7, dans lequel le filtre récurrent est un filtre de Kalman étendu.

9. Procédé selon l'une des revendications 6 à 8, dans lequel la position prédite de l'aéronef est calculée à partir de l'erreur de mesure du radar.

10. Radar secondaire, **caractérisé en ce qu'**il est configuré pour mettre en oeuvre le procédé selon l'une des revendications précédentes.

## Patentansprüche

1. Verfahren zum Verwalten eines im S-Modus arbeitenden Sekundärradars, wobei das Verfahren Folgendes umfasst:
a) eine Erkennung im "Jagdmodus", wobei der "Jagdmodus" so lange durchgeführt wird, wie kein Flugzeug vom Sekundärradar erkannt wird, wobei der "Jagdmodus" eine Vielzahl von allgemeinen Abfrageperioden des Sekundärradars, All-Call, und eine Vielzahl von selektiven Abfrageperioden, Roll-Call, in einem ersten Abhörfenster umfasst, wobei das erste Abhörfenster ein Rauschfenster umfasst;
b) eine Erkennung im "Verfolgungsmodus", wobei der "Verfolgungsmodus" implementiert wird, wenn eine gültige Antwort auf eine selektive Roll-Call-Abfrage während des "Jagdmodus" erkannt wurde, wobei der "Verfolgungsmodus" eine Vielzahl von allgemeinen Abfrageperioden, All-Call, und eine Vielzahl von selektiven Abfrageperioden, Roll-Call, in einem zweiten Abhörfenster umfasst, wobei das zweite Abhörfenster um die Position des Flugzeugs herum liegt, die vom Sekundärradar als Antwort auf eine allgemeine All-Call-Abfrage vorhergesagt wurde,
wobei das Verfahren **dadurch gekennzeichnet ist, dass** es einen Zwischenschritt a1) umfasst, der zwischen der Erkennung im "Jagdmodus" und der Erkennung im "Verfolgungsmodus" ausgeführt wird, wobei der Zwischenschritt Folgendes umfasst:
i) Erkennen der An- oder Abwesenheit der Antwort des Flugzeugs in einem Rauschfenster des Sekundärradars;
ii) Durchführen mindestens einer selektiven Roll-Call-Abfrage unter Verwendung des ersten Abhörfensters, solange sich die Antwort des Flugzeugs nicht innerhalb des Rauschfensters befindet.

2. Verfahren nach Anspruch 1, wobei das Sekundärradar eine Antenne umfasst, wobei das erste Abhörfenster für ein gegebenes Luftfahrzeug auf der Basis der Drehgeschwindigkeit der Antenne des Sekundärradars und der vorhergesagten Position des Luftfahrzeugs bei der nächsten Antennenumdrehung berechnet wird.

3. Verfahren nach Anspruch 2, wobei die vorhergesagte Position des Luftfahrzeugs auf der Basis aller möglichen Positionen des Luftfahrzeugs berechnet wird, welche auf der Basis der bekannten Flugbahn des Luftfahrzeugs und aus vom Sekundärradar empfangenen kinematischen Parametern des Luftfahrzeugs berechnet werden.

4. Verfahren nach einem der vorhergehenden Ansprüche, wobei das Rauschfenster auf der Basis der Differenz zwischen einer idealen Flugbahn des Luftfahrzeugs und einer vom Sekundärradar vorhergesagten Position des Luftfahrzeugs berechnet wird.

5. Verfahren nach Anspruch 4, wobei die ideale Flugbahn des Luftfahrzeugs auf der Basis eines Satzes von Hypothesen über den Flug des Luftfahrzeugs entlang einer geraden Flugbahn und bei einer konstanten Luftfahrzeuggeschwindigkeit berechnet wird.

6. Verfahren nach einem der Ansprüche 2 bis 5, wobei die vorhergesagte Position des Luftfahrzeugs auf der Basis eines Satzes von berechneten Abweichungen berechnet wird, wobei eine Abweichung der Abweichung zwischen einer Schätzung der Position des Luftfahrzeugs und einer in einer der vorangegangenen Runden seit der ersten Erkennung des Luftfahrzeugs gemessenen Position des Luftfahrzeugs entspricht.

7. Verfahren nach Anspruch 6, wobei die Abweichung unter Verwendung eines rekursiven Filters über die Zeit integriert wird.

8. Verfahren nach Anspruch 7, wobei das rekursive Filter ein erweitertes Kalman-Filter ist.

9. Verfahren nach einem der Ansprüche 6 bis 8, wobei die vorhergesagte Position des Luftfahrzeugs auf der Basis des Messfehlers des Radars berechnet wird.

10. Sekundärradar, **dadurch gekennzeichnet, dass** es zum Implementieren des Verfahrens nach einem der vorhergehenden Ansprüche konfiguriert ist.

## Claims

1. A method for managing a secondary radar operating in S Mode, the method comprising:
a) a detection in "seeking mode", said "seeking mode" being implemented as long as no aircraft is detected by the secondary radar, the "seeking mode" comprising a plurality of all-call secondary-radar interrogation periods and a plurality of roll-call interrogation periods, in a first monitoring window, the first monitoring window comprising a noise window;
b) a detection in "tracking mode", said "tracking mode" being implemented if a valid response to a roll-call interrogation was detected in "seeking mode", the "tracking mode" comprising a plurality of all-call interrogation periods, and a plurality of roll-call interrogation periods, in a second monitoring window, said second monitoring window being around the position of the aircraft predicted by the secondary radar in response to an all-call interrogation;
the method being **characterised in that** it comprises an intermediate step a1), which is executed between the detection in "seeking mode" and the detection in "tracking mode", said intermediate step comprising:
i) detecting the presence or absence of the reply of the aircraft in a noise window of the secondary radar;
ii) carrying out at least one roll-call interrogation, using the first monitoring window, as long as the reply of the aircraft is not located in said noise window.

2. The method according to claim 1, wherein the secondary radar comprises an antenna, the first monitoring window being computed, for a given aircraft, on the basis of the speed of rotation of the antenna of the secondary radar, and of the predicted position of the aircraft for the following antenna revolution.

3. The method according to claim 2, wherein the predicted position of the aircraft is computed on the basis of all the possible positions of the aircraft, these being computed on the basis of the known path of the aircraft and of kinematic aircraft parameters received by the secondary radar.

4. The method according to one of the preceding claims, wherein the noise window is computed on the basis of the difference between an ideal path of the aircraft and a position of the aircraft predicted by the secondary radar.

5. The method according to claim 4, wherein the ideal path of the aircraft is computed on the basis of a set of hypothesis stating that the aircraft will fly along a straight path at a constant aircraft speed.

6. The method according to one of claims 2 to 5, wherein the predicted position of the aircraft is computed on the basis of a set of computed deviations, a deviation corresponding to the deviation between an estimate of the position of the aircraft and a position of the aircraft measured in one of the preceding revolutions, starting from when the aircraft was first detected.

7. The method according to claim 6, wherein the deviation is integrated with respect to time using a recurrent filter.

8. The method according to claim 7, wherein the recurrent filter is an extended Kalman filter.

9. The method according to one of claims 6 to 8, wherein the predicted position of the aircraft is computed on the basis of the measurement error of the radar.

10. A secondary radar, **characterised in that** it is configured to implement the method according to one of the preceding claims.
